# EUROPÄISCHE PATENTSCHRIFT

(11) **EP 0 489 363 B1**
(45) Veröffentlichungstag und Bekanntmachung des Hinweises auf die Patenterteilung: **27.09.1995**
(21) Anmeldenummer: 91120466.7
(22) Anmeldetag: 29.11.1991
(51) Int. Cl.: B29C 45/76

(54) **Verfahren zum Spritzgiessen von Formteilen aus spritzgiessfähigem Kunststoff und Vorrichtung zur Durchführung des Verfahrens**
Method for injecting items of mouldable plastic and apparatus for carrying out this method
Procédé de moulage par injection de pièces en matière plastique et dispositif pour la mise en oeuvre de ce procédé

(30) Priorität: 01.12.1990 DE 4038333
(43) Veröffentlichungstag der Anmeldung: 10.06.1992
(73) Patentinhaber: Battenfeld Kunststoffmaschinen Ges.m.b.H., A-2542 Kottingbrunn (AT)
(72) Erfinder: Heindl, Friedrich, Ing., A-2500 Baden (AT); Huber, Anton, Dipl.-Ing., A-2560 Berndorf (AT)
(74) Vertreter: Müller, Gerd, Dipl.-Ing.

(56) Entgegenhaltungen:
- EP-A- 0 262 229
- EP-A- 0 325 076
- EP-A- 0 365 684
- WO-A-91/13745
- JP-A-3 230 930 (MITSUBISHI JUKOGYO K.K.) & WORLD PATENTS INDEX LATEST Section Ch, Week 47, 18. November 1991 Derwent Publications Ltd., London, GB; Class A, AN 91-344319
- PATENT ABSTRACTS OF JAPAN vol. 13, no. 194 (M-823)(3542) 10. Mai 1989 & JP-A-1 022 526 (KOORITSU KIKAI K.K.) 25. Januar 1989
- PATENT ABSTRACTS OF JAPAN vol. 12, no. 305 (M-733)(3152) 19. August 1988 & JP-A-63 082 722 (NISSEI PLASTICS IND CO) 13. April 1988
- PATENT ABSTRACTS OF JAPAN vol. 14, no. 276 (M-984)(4219) 14. Juni 1990 & JP-A-2 081 617 (KOMATSU LTD) 22. März 1990
- PATENT ABSTRACTS OF JAPAN vol. 9, no. 215 (M-409)(1938) 3. September 1985 & JP-A-60 076 321 (TOSHIBA KIKAI K.K.) 30. April 1985
- PATENT ABSTRACTS OF JAPAN vol. 9, no. 256 (M-421)(1979) 15. Oktober 1985 & JP-A-60 107 315 (KIMURA K.K.) 12. Juni 1985
- PATENT ABSTRACTS OF JAPAN vol. 14, no. 335 (M-1000)(4278) 19. Juli 1990 & JP-A-2 116 529 (TOYO MACH & METAL CO LTD)
- PATENT ABSTRACTS OF JAPAN vol. 14, no. 305 (M-992)(4248) 29. Juni 1990 & JP-A-2 098 421 (TOYO MACH & METAL CO LTD) 10. April 1990
- PATENT ABSTRACTS OF JAPAN vol. 13, no. 14 (M-784)(3362) 13. Januar 1989 & JP-A-63 227 316 (NISSEI PLASTICS IND CO) 21. September 1988
- PATENT ABSTRACTS OF JAPAN vol. 12, no. 464 (M-771)(3311) 6. Dezember 1988 & JP-A-63 188 025 (KOMATSU LTD) 3. August 1988
- PATENT ABSTRACTS OF JAPAN vol. 11, no. 250 (M-616)(2697) 14. August 1987 & JP-A-62 060 621 (KATASHI AOKI) 17. März 1987
- PATENT ABSTRACTS OF JAPAN vol. 11, no. 125 (M-582)(2572) 18. April 1987 & JP-A-61 266 215 (JAPAN STEEL WORKS LTD)
- KUNSTSTOFFE. Bd. 78, Nr. 10, Oktober 1988, MÜNCHEN DE Seiten 895 - 904; J. ROTHE: 'Maschinentechnische Verbesserungen beim Spritzgiessen'

## Beschreibung

Die Erfindung betrifft ein Verfahren zum Spritzgießen von Formteilen aus spritzgießfähigem Kunststoff, bei welchem zunächst das Kunststoffmaterial durch eine drehangetriebene Extruderschnecke aus dem Schneckenzylinder eines Extruders in einen Schneckenvorraum plastifiziert wird, daraufhin der gefüllte Schneckenvorraum gegen Rückströmen der Kunststoffschmelze in den Schneckenzylinder aktiv abgesperrt wird, bei welchem dann die Kunststoffschmelze durch Vorschub der Extruderschnecke aus dem Speicherraum in die Spritzform ausgetrieben wird, und bei welchem der Ablauf des Spritzvorgangs von einem z.B. nach Geschwindigkeit über Weg, vorgegebenen bzw. vorgebbaren Einspritzprofil bestimmt wird, wobei das aktive Absperren des gefüllten Schneckenvorraums gegen den Widerstand einer Verschlußdüse erfolgt, und wobei der Startpunkt für die Vorschubbewegung der Extruderschnecke erst mit der aktiven Sperrung des Kunststoffschmelze-Rückstroms und/oder mit dem Öffnen der Verschlußdüse in die Spritzform gesetzt bzw. bestimmt wird.

Gegenstand der Erfindung ist aber auch eine Vorrichtung zum Spritzgießen von Formteilen aus thermoplastischem Kunststoff, bei welcher einem Scheckenextruder mit einem von einer Rückstromsperre begrenzten Schneckenvorraum für die auszutreibende Kunststoffschmelze zur Beeinflussung des Spritzvorgang ein programmiertes bzw. programmierbares Ablauf-Steuersystem zugeordnet ist, wobei dem Ablauf-Steuersystem eine die Rückstromsperre aktivierende Verschlußdüse und ein Starter zugeordnet sind, und wobei der Starter in Abhängigkeit von der Schließstellung der Rückstromsperre und/oder von der Öffnungsbewegung der Verschlußdüse aktivierbar ist.

Verfahren und Vorrichtungen mit vorgenannter Merkmalsausstattung gehören bereits mehrfach zum Stand der Technik. Dies beispielsweise durch
Patent-Abstracts of Japan, Vol.13, Number 194 (M-823) (3542) und JP-A- 1-22526;
Patent-Abstracts of Japan, Vol.9, Number 215 (M-409) (1938) und JP-A-60-76321;
Patent-Abstracts of Japan, Vol.11, Number 250 (M-616) (2697) und JP-A-62-060621.

Bei diesen bekannten Spritzgießverfahren und -vorrichtungen erfolgt das aktive Absperren des gefüllten Schneckenvorraums gegen den Widerstand einer Verschlußdüse und der Startpunkt für die den eigentlichen Spritzvorgang bewirkende Vorschubbewegung der Extruderschnecke wird erst mit der aktiven Sperrung des Kunststoffschmelze-Rückstroms und/oder mit dem Öffnen der Verschlußdüse in die Spritzform gesetzt bzw. bestimmt. Die in diesem Stand der Technik beschriebenen Arbeitsabläufe zielen dabei lediglich darauf ab, jedem der aufeinanderfolgenden Spritzgieß-Schüsse immer den gleichen Betrag bzw. das gleiche Volumen an Kunstharz bereitzustellen bzw. zuzuteilen.

Der Nachteil dieser bekannten Spritzgießverfahren und -vorrichtungen liegt jedoch darin, daß der Start des vorgegebenen bzw. vorgebbaren Einspritzprofils mehr oder weniger verschieden vom Startpunkt des tatsächlichen Einspritzvorgangs stattfindet, was zu Folge hat, daß die in aufeinanderfolgenden Spritzzyklen fertiggestellten Teile nicht in allen Fällen den geforderten Qualitätsstandard erfüllen können.

Deshalb ist es Ziel der Erfindung, die Standardabweichung eines Qualitätsmerkmals von produzierten Spritzformteilen zu minimieren, also die Ausschußquote ohne wesentlichen technischen Mehraufwand zu verringern.

Der Erfindung liegt daher die Aufgabe zugrunde, ein Verfahren der gattungsgemäßen Art sowie eine Vorrichtung zu dessen Durchführung anzugeben, die es möglich machen, den Istwert-Verlauf jedes einzelnen Einspritzvorgangs möglichst exakt an eine hierfür vorbestimmte bzw. vorbestimmbare Sollwert-Vorgabe heranzuführen.

Erreichen läßt sich die Lösung dieser Aufgabe nach der Erfindung auf drei verschiedenen Wegen, nämlich jeweils mit den Verfahrensschritten nach den Merkmalen der drei einander nebengeordneten, unabhängigen Ansprüche 1, 2 und 3. Die exakte Abarbeitung des Einspritzprofils einer Sollwert-Vorgabe wird erfindungsgemäß erst eingeleitet bzw. beginnt erst dann, wenn die aktive Sperrung des Kunststoffschmelze-Rückstroms und/oder das Öffnen der Verschlußdüse in die Spritzform stattfindet. D.h. während und nach dem formfüllenden Spritzvorgang wird sogleich die exakte Abarbeitung des Einspritzprofils einer Sollwert-Vorgabe erst durch das Vorliegen einer zusätzlichen Bedingung gewährleistet.

Nach dem Kennzeichen des Anspruchs 1 ist diese zusätzliche Bedingung erst bei Übereinstimmung des im Schneckenvorraum anstehenden Schmelzedrucks in einem vorgegebenen bzw. vorgebbaren Referenz- bzw. Solldruck erreicht. Nach Anspruch 2 stellt sie sich bei Übereinstimmung eines im Vorschubzylinder für die Extruderschnecke anstehenden Arbeitsmitteldruckes mit einem vorgegebenen bzw. vorgebbaren Referenz- bzw. Solldruck ein. Nach Anspruch 3 ist schließlich die zusätzliche Bedingung durch eine zeitbestimmte Beaufschlagung des Vorschubzylinders für die Extruderschnecke mit einer nach Druck und Menge definierbaren Arbeitsflüssigkeit gegeben.

Bei einer erfindungsgemäßen Vorrichtung zur Durchführung des Verfahrens kann nach dem unabhängigen Anspruch 4 der Starter ein der Nadelverschlußdüse zugeordneter Mikroschalter sein. Nach dem unabhängigen Anspruch 5 kann bei einer solchen Spritzgießvorrichtung der Starter aber auch aus zusammenarbeitenden Druck-, Mengen- und Zeitschaltern bestehen, wobei die Druck- und Mengenschalter durch das Arbeitsmittel für den Vorschubzylinder der Extruderschnecke beaufschlagbar sind.

Weitere Merkmale und Vorteile der Erfindung werden nachfolgend an in der Zeichnung dargestellten Ausführungsbeispielen erläutert. Es zeigen
- Figur 1: ein Diagramm, in dem mit Geschwindigkeit über Weg ein Einspritzprofil der Sollwert-Vorgabe für den Ablauf eines Spritzvorgangs zu sehen ist, bei dem der eigentliche Spritzvorgang innerhalb eine begrenzten Anfangs-Wegstrecke des gestarteten Einspritzprofils der Sollwert-Vorgabe zu variieren beginnen kann,
- Figur 2: ein der Figur 1 entsprechendes Diagramm des Einspritzprofils einer Sollwert-Vorgabe, bei dem jedoch der Start für das Einspritzprofil mit dem Startpunkt für den tatsächlichen übereinstimmt,
- Figur 3: in schematisch vereinfachter Darstellung einen über eine Nadelverschlußdüse mit einer Spritzgießform in Verbindung stehenden Extruder, dem ein Ablauf-Steuersystem für die Einspritzvorgänge in die Spritzform zugeordnet ist, die
- Figuren 4 bis 6: jeweils im Längsschnitt, das mit einer Nadelverschlußdüseausgestattete Austrittsende eines Schneckenextruders, bei dem sich im Schneckenzylinder zwischen dem freien Ende der Extruderschnecke und der Nadelverschlußdüse ein Schneckenvorraum für spritzgießfähige Kunststoffschmelze befindet, der zum Schneckenzylinder hin aktiv durch eine Rückstromsperre verschließbar ist, wobei drei verschiedene Betriebszustände des Extruders zu sehen sind, während die
- Figuren 7 bis 9: drei verschiedene Betriebsvarianten für einem mit einem Ablauf-Steuersystem für den Spritzvorgang ausgestatteten Extruder nach Figur 3 wiedergeben.

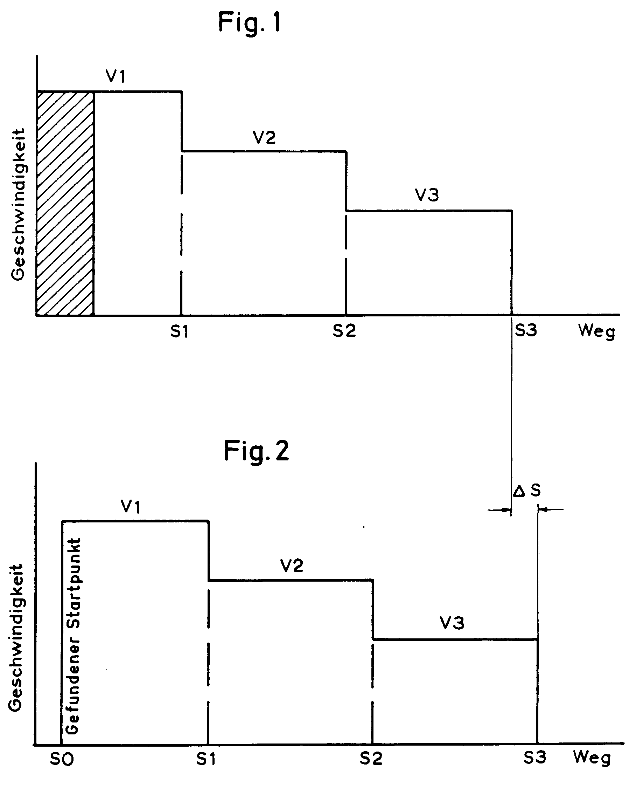

Aus den Figuren 1 und 2 der Zeichnung geht jeweils ein Einspritzprofil für die Sollwert-Vorgaben von Spritzgießvorgängen hervor, die mit Hilfe eines Plastifizier-Extruders für Kunststoffmaterial ausgeübt werden sollen. Dabei ergibt sich aus beiden Diagrammen, daß der Spritzvorgang über einen bei S 1 begrenzten Weg mit einer Geschwindigkeit V 1 über eine bei S 2 begrenzten Weg mit einer Geschwindigkeit V 2 und über einen bei S 3 begrenzten Weg mit einer Geschwindigkeit V 3 durchgeführt wird. Dabei haben die Geschwindigkeiten V 1, V 2, V 3 über die Wegstrecken S 1, S 2, S 3 jeweils linearen Verlauf aber von S 1 nach S 3 hin stufenförmig abfallenden Tendenz.

Dem in Figur 1 dargestellten Diagramm entspricht die Arbeitsweise eines herkömmlichen Verfahrens zum Spritzgießen von Formteilen, bei welchem zunächst das Kunststoffmaterial aus dem Schneckenzylinder eines Extruders in einen Schneckenvorraum plastifiziert und daraufhin der gefüllte Vorraum gegen Rückstrom der Kunststoffschmelze in den Schneckenzylinder aktiv abgesperrt wird. Erst dann wird aus dem Schneckenvorraum die thermoplastische Kunststoffschmelze in die Spritzform ausgetrieben und dabei der Anlauf des Spritzvorganges von dem vorgegebenen bzw. vorgebbaren Einspritzprofil bestimmt.

Kennzeichnend für diese bekannten Spritzgießverfahren ist dabei, daß das der Sollwert-Vorgabe entsprechende Einspritzprofil des Diagramms nach Figur 1 mit Beginn jedes einzelnen Arbeitszyklus des Extruders gestartet wird, daß aber die aktive Absperrung des Speichervorraums durch die Rückstromsperre erst an irgendeinem Punkt einer Wegstrecke stattfindet, welche innerhalb des Flächenbereiches S 1/V 1 liegt, die durch die schraffierte Zone eingegrenzt ist. Damit weicht aber der Istwert des Einspritzprofils aufeinanderfolgende Einspritzzyklen mehr oder weniger stark von der Sollwert-Vorgabe dieses Einspritzprofils ab und beeinträchtigt deshalb nachhaltig die Qualität der fertigen Spritzgießteile.

Das Diagramm der Figur 2 kennzeichnet demgegenüber das erfindungsgemäße Spritzgießverfahren für Formteile aus spritzgießfähigem Kunststoff, welches dadurch optimiert ist, daß der Startpunkt für das Einspritzprofil der Sollwert-Vorgabe erst mit der aktiven Sperrung des Kunststoffschmelze-Rückstromes und/oder mit dem Öffnen einer Spritzdüse (z. B. einer Nadelverschlußdüse) in die Spritzform gesetzt bzw. bestimmt wird. Hierdurch steht in jedem Falle für jeden Spritzzyklus das gesamte Einspritzprofil der Sollwert-Vorgabe zur Aussteuerung des Einspritzvorgangs in die Spritzform zur Verfügung, und zwar unabhängig davon, welche Wegstrecke der Extruder nach Einleitung eines Spritzgieß-Arbeitszyklus durchlaufen hat, bis der mit spritzgießfähiger Kunststoffschmelze beschickte Speicherraum durch die Rückstromsperre aktiv abgesperrt wird.

Um den auf der Arbeits-Wegstrecke des Extruders jeweils mit dem aktiven Schließen der Rückstromsperre gefundenen Startpunkt S 0, also um den Weg Delta S, verschiebt sich daher das gesamte Einspritzprofil der Sollwert-Vorgabe und stellt dadurch sicher, daß die Standardabweichung eines Qualitätsmerkmals der produzierten Spritzgießteile minimiert wird. Durchgeführte Basisversuche haben gezeigt, daß sich Standardabweichungen des Schußgewichtes gegenüber den herkömmlichen Spritzgießverfahren nach dem Diagramm der Figur 1 mindestens halbieren lassen.

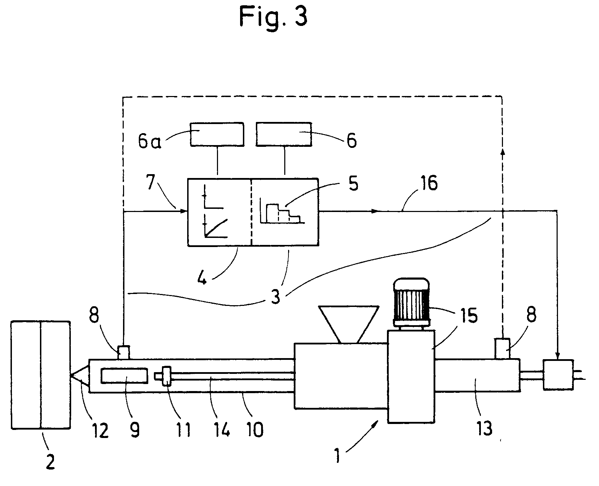

Figur 3 der Zeichnung zeigt in schematisch vereinfachter Darstellung eines Extruder 1 zum Beschicken einer Spritzform 2 mit spritzgießfähiger Kunststoffschmelze, an dem der Einspritzvorgang für die Kunststoffschmelze durch ein Ablauf-Steuersystem 3, bspw. mit Hilfe eines programmierbaren Rechners oder Mikroprozessors 4, beeinflußt werden kann.

In den Rechner bzw. Mikroprozessor 4 des Ablauf-Steuersystems 3 wird dabei das Einspritzprofil 5 für den jeweils durchzuführenden Einspritzvorgang als Sollwert-Vorgabe über eine Eingabeeinheit 6 einprogrammiert. Ein weiterer Eingang 7 des Rechners bzw. Mikroprozessors 4 liegt an einem als Drucksensor ausgelegten Schalter 8. Dieser Drucksensor bzw. Schalter 8 ist dabei vornehmlich im Speichervorraum 9 für die thermoplastische Kunststoffschmelze, also im Ausgangsbereich des Schneckenzylinders 10 zwischen einer Rückströmungssperre 11 und der an der Spritzform 2 anliegenden Spritzdüse 12, insbesondere einer Nadelverschlußdüse vorgesehen. Der als Drucksensor arbeitende Schalter 8 kann aber auch dem hydraulischen Spritzzylinder 13 zugeordnet werden, welcher das axiale Verschieben der Extruderschnecke 14 im Schneckenzylinder 10 bewirkt, um dadurch die thermoplastische Kunststoffschmelze aus dem Schneckenvorraum 9 durch die Spritzdüse 12, insbesondere Nadelverschlußdüse, in die Spritzform auszutreiben.

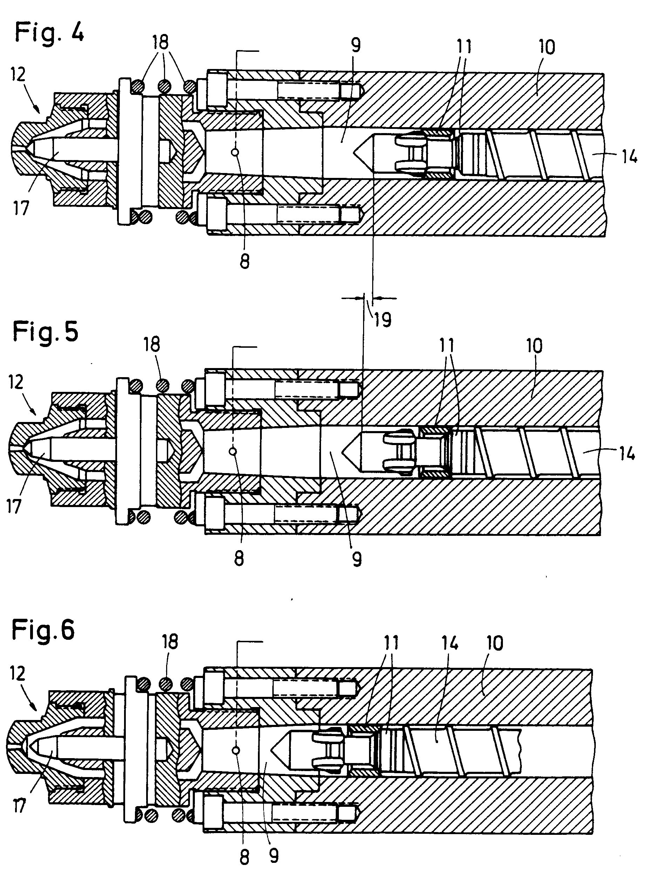

Die beim Betrieb des Extruders 1 am Schneckenzylinder 10 drehangetriebene Extruderschnecke 14 fördert die plastifizierte Kunststoffschmelze gemäß Figur 4 durch die geöffnete Rückstromsperre 11 in den Schneckenvorraum 9 und füllt diesen bis zur Spritzdüse 12 hin mit der thermoplastischen Kunststoffschmelze auf. Sobald der Schneckenvorraum 9 aufgefüllt ist, baut sich hierin ein Mediendruck auf, der das aktive Schließen der Rückstromsperre 11 gegen die Extruderschnecke 14 bewirkt, wie das in Figur 5 der Zeichnung zu sehen ist. Der beim Schließen der Rückstromsperre 11 aufgebaute Mediendruck im Schneckenvorraum 9 aktiviert dann den als Drucksensor ausgelegten Schalter 8 derart, daß dieser auf den Eingang 7 des Rechners bzw. Mikroprozessors 4 ein Signal gibt. Erst dieses Signal setzt dann den Rechner bzw. Mikroprozessor 4 in Betrieb, womit dieser über seinen Ausgang 16 die Sollwert-Vorgaben des Einspritzprofils 5 an den Schneckenzylinder 13 bzw. an die diesen beeinflussende Druckmittel-Versorgungseinheit weiterleitet. Nunmehr wird durch den Spritzzylinder 13 die Extruderschnecke 14 in den Schneckenvorraum 9 hinein vorgeschoben, wie das in Figur 6 der Zeichnung zu sehen ist. Dabei öffnet dann die Nadelverschlußdüse 12 unter der Einwirkung des auf die Schrägflächen der Düsennadel 17 einwirkenden Spritzdrucks gegen die Rückstellwirkung der Feder 18, womit die thermoplastische Kunststoffschmelze in die Spritzform 2 eingespritzt wird. Der eigentliche Spritzvorgang setzt dabei mit dem Ansprechen des als Drucksensor ausgelegten Schalters 8 und folglich am Startpunkt S 0 für das Einspritzprofil 5 ein, dergestalt das die verschiedenen Spritzgeschwindigkeiten V 1, V 2, V 3 exakt über die Wegstrecken S 1, S 2 und S 3 ablaufen und dadurch eine optimale Durchführung jedes einzelnen Spritzvorgangs gewährleisten.

Da der Rechner bzw. Mikroprozessor 4 das Einspritzprofil 5 der Sollwert-Vorgabe jeweils erst mit dem aktiven Schließen der Rückstromsperre 11 und/oder mit dem Öffnen der Spritzdüse 12 startet, ist in jedem Falle sichergestellt, daß der Einspritzvorgang in enger Anlehnung an die Sollwert-Vorgabe des Einspritzprofils 5 über den gesamten Weg S 0 bis S 3 mit den gestuften Spritzgeschwindigkeiten V 1, V 2, V 3 stattfindet.

An dieser Stelle sei noch erwähnt, daß die Spritzdüse 12 nicht nur als Nadelverschlußdüse mit einer durch eine Feder 18 vorgespannten Düsennadel ausgelegt werden kann, sondern daß es auch möglich ist, sie mit einer hydraulisch betätigbaren Düsennadel 17 zu benutzen. Die Hydraulikbetätigung einer solchen Spritzdüse ist dann abhängig vom Ablauf-Steuersystem 3. Es kann praktisch jede Art von Verschlußdüse zum Einsatz kommen.

Nach Figur 3 der Zeichnung ist es auch möglich, das Ablauf-Steuersystem 3 für das Einspritzprofil 5 der Sollwert-Vorgabe in direkte Abhängigkeit von dem die Extruderschnecke betätigenden hydraulischen Spritzzylinder 13 zu setzen. Dabei wirkt sich die nach dem aktiven Schließen der Rückströmsperre 11 der Extrudeschnecke 14 auftretende erhöhte Axialkraft innerhalb des Spritzzylinders 13 als Druckanstieg aus, welcher den als Drucksensor ausgelegten Schalter 8 auslöst und dann ein entsprechendes Signal auf den Eingang 7 des Rechners bzw. Mikroprozessors 4 gibt, um in diesem im Einspritzprofil 5 den Startpunkt S 0 zuzuordnen.

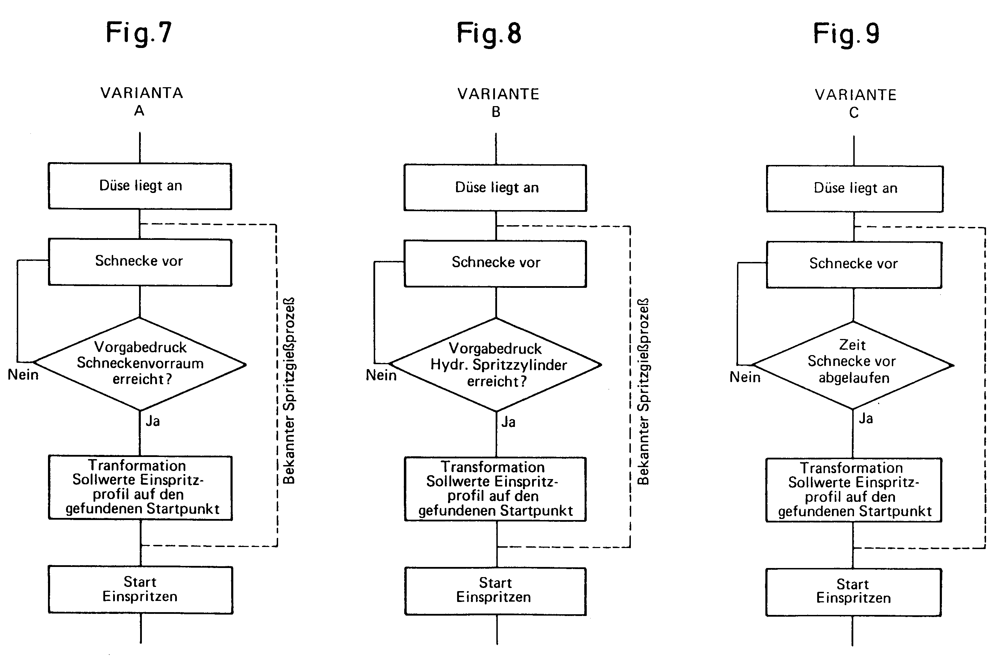

Drei verschiedene Varianten einer Ablaufsteuerung für das Einspritzprofil der Sollwert-Vorgaben sind in den Figuren 7 bis 9 der Zeichnung angedeutet.

Bei der in Figur 7 dargestellten Methode wird dabei der Druck der thermoplastischen Kunststoffschmelze im Schneckenvorraum 9 gemessen und mit einem im Rechner bzw. Mikroprozessor 4 voreingestellten Sollwert verglichen. Sobald der Sollwert erreicht wird, findet im Rechner bzw. Mikroprozessor 4 die Transformation des Einspritzprofiles 5 auf den mit der Druckübereinstimmung gefundenen Start S 0 statt, mit der Folge, daß über den Gesamtweg S 0 bis S 3 der Einspritzvorgang ausgelöst wird und zwar über die Wegstrecke S 0 bis S 3 mit der höchsten Spritzgeschwindigkeit V 1, über den S 1 bis S 2 mit einer mittleren Spritzgeschwindigkeit V 2 sowie über den Weg S 2 bis S 3 mit einer niedrigen Spritzgeschwindigkeit V 3.

Bei der in Figur 8 dargestellten Variante wird nicht unmittelbar der Druck im Schneckenvorraum 9 gemessen, sondern die Druckmessung findet hier unmittelbar im Bereich des hydraulischen Spritzzylinders 13 statt. Im übrigen stimmt jedoch die Arbeitsmethode nach Figur 8 mit derjenigen nach Figur 7 überein.

In Figur 9 wird schließlich noch gezeigt, daß es auch möglich ist, unter definierten Bedingungen bspw. mit vorgegebenem Arbeitsdruck und empirisch gefundener Fördermenge der Hydraulikflüssigkeit in den Spritzzylinder 13 die Extruderschnecke 14 über eine bestimmte Zeit hinweg vorwärts zu bewegen, um auf diese Art und Weise den Wegpunkt anzusteuern, bei dem die Rückstromsperre 11 des Speichervorraums 9 aktiv verschließt und damit den Startpunkt S 0 für das jeweilige Einspritzprofil 5 der Sollwert-Vorgabe ermittelt bzw. festlegt.

In allen Fällen ist es aber ausschlaggebend, daß sich bei der Einleitung eines jeden Arbeitszyklus das Einspritzprofil der Sollwert-Vorgabe insgesamt um denjenigen Weg Delta S verschiebt, um welchen der Start S 0 für das Abarbeiten des Einspritzprofils 5 vom Beginn des Arbeitszyklus weg verschoben wird.

Ein Vergleich der Figuren 4 und 5 macht deutlich, daß zum aktiven Schließen der Rückströmsperre 11 gegen die Nadelverschlußdüse 12 nur ein relativ geringer Vorschubweg 10 der Extruderschnecke 14 im Schneckenzylinder 10 benötigt wird, um den Druck in der im Schneckenvorraum 9 befindlichen thermoplastischen Kunststoffschmelze auf das Niveau zu bringen, bei welchem der als Drucksensor ausgelegte Schalter 8 anspricht und dadurch den Rechner bzw. Mikroprozessor 4 im Ablauf-Steuersystem 3 auslöst. Wenn dabei der durch das aktive Schließen der Rückstromsperre 11 erzeugte Druck der im Schneckenvorraum 9 befindlichen Schmelze ausreicht, um die Düsennadel 17 der Nadelverschlußdüse 12 gegen die Rückstellwirkung der Feder 18 zu öffnen, dann kann auch die Düsennadel 17 einen Mikroschalter betätigen, der im gleichen Sinne wie der als Drucksensor ausgelegte Schalter 8 wirkt, nämlich den Rechner bzw. Mikroprozessor 4 des Ablauf-Steuersystems 3 zur Freigabe des Einspritzprofils 5 aktiviert. Der Drucksensor-Schalter 8 im Speichervorraum 9 und der der Düsennadel 17 zugeordnete Mikroschalter können - je nach Bedarf - einander auch so zugeordnet werden, daß sie entweder unabhängig voneinander oder auch gemeinsam die Aktivierung des Rechners bzw. Mikroprozessors 4 im Ablauf-Steuersystem 3 einleiten.

Abschließend und nur der Vollständigkeit halber wird noch darauf hingewiesen, daß es sich bei der als Verschlußdüse ausgelegten Spritzdüse 12 nicht notwendigerweise um eine Nadelverschlußdüse handeln muß, sondern daß jede bekannte Art von Verschlußdüsen eingesetzt werden kann, so bspw. Drehschieber, Schiebeverschlußdüsen oder dergleichen.

## Patentansprüche

1. Verfahren zum Spritzgießen von Formteilen aus spritzgießfähigem Kunststoff, bei welchem zunächst das Kunststoffmaterial durch eine drehangetriebene Extruderschnecke aus dem Schneckenzylinder eines Extruders in einen Schneckenvorraum plastifiziert wird, daraufhin der gefüllte Schneckenvorraum gegen Rückströmen der Kunststoffschmelze in den Schneckenzylinder aktiv abgesperrt wird, bei welchem dann die Kunststoffschmelze durch Vorschub der Extruderschnecke aus dem Speicherraum in die Spritzform ausgetrieben wird, und bei welchem der Ablauf des Spritzvorgangs von einem z. B. nach Geschwindigkeit über Weg, vorgegebenen bzw. vorgebbaren Einspritzprofil bestimmt wird, wobei das aktive Absperren (11) des gefüllten Schneckenvorraums (9) gegen den Widerstand einer Verschlußdüse (11, 17, 18) erfolgt, und wobei der Startpunkt für die Vorschubbewegung (13) der Extruderschnecke (14) erst mit der aktiven Sperrung (11, 14, 19) des Kunststoffschmelze-Rückstroms und/oder mit dem Öffnen der Verschlußdüse (12, 17, 18) in die Spritzform (2) gesetzt bzw. bestimmt wird (8),
**dadurch gekennzeichnet,**
daß die exakte Abarbeitung des Einspritzprofils der Sollwert-Vorgabe mit der aktiven Sperrung (11, 14, 19) des Kunststoffschmelze-Rückstroms und/oder mit dem Öffnen der Verschlußdüse (12, 17, 18) in die Spritzform (2) erst bei Übereinstimmung des im Schneckenvorraum (9) anstehenden Schmelzdruckes mit einem vorgebenen bzw. vorgebbaren Referenz- bzw. Solldruck (6 a) gestartet wird (4, 7).

2. Verfahren zum Spritzgießen von Formteilen aus spritzgießfähigem Kunststoff, bei welchem zunächst das Kunststoffmaterial durch eine drehangetriebene Extruderschnecke aus dem Schneckenzylinder eines Extruders in einen Schneckenvorraum plastifiziert und daraufhin der gefüllte Schneckenvorraum gegen Rückströmen der Kunststoffschmelze in den Schneckenzylinder aktiv abgesperrt wird, bei welchem dann die Kunststoffschmelze durch Vorschub der Extruderschnecke aus dem Speicherraum in die Spritzform ausgetrieben wird, und bei welchem der Ablauf der des Spritzvorgangs von einem z. B. nach Geschwindigkeit über Weg, vorgegebenen bzw. vorgebbaren Einspritzprofil bestimmt wird, wobei das aktive Absperren (11) des gefüllten Schneckenvorraums (9) gegen den Widerstand einer Verschlußdüse (11, 17, 18) erfolgt, und wobei der Startpunkt für die Vorschubbewegung (13) der Extruderschnecke (14) erst mit der aktiven Sperrung (11, 14, 19) des Kunststoffschmelze-Rückstroms und/oder mit dem Öffnen der Verschlußdüse (12, 17, 18) in die Spritzform (2) gesetzt bzw. bestimmt wird (8),
**dadurch gekennzeichnet,**
daß die exakte Abarbeitung des Einspritzprofils der Sollwert-Vorgabe mit der aktiven Sperrung (11, 14, 19) des Kunststoffschmelze-Rückstrom und/oder mit dem Öffnen der Verschlußdüse (12, 17, 18) in die Spritzform (2) ausschließlich bei Übereinstimmung eines im Vorschubzylinder (13) für die Extruderschnecke (14) anstehenden Arbeitsmitteldurckes mit einem vorgegebenen bzw. vorgebbaren Referenz- bzw. Solldruck (6a) gestartet wird (4, 7).

3. Verfahren zum Spritzgießen von Formteilen aus spritzgießfähigem Kunststoff, bei welchem zunächst das Kunststoffmaterial durch eine drehangetriebene Extruderschnecke aus dem Schneckenzylinder eines Extruders in einen Schneckenvorraum plastifiziert und daraufhin der gefüllte Schneckenvorraum gegen Rückströmen der Kunststoffschmelze in den Schneckenzylinder aktiv abgesperrt wird, bei welchem dann die Kunststoffschmelze durch Vorschub der Extruderschnecke aus dem Speicherraum in die Spritzform ausgetrieben wird, und bei welchem der Ablauf des Spritzvorgangs von einem z. B. nach Geschwindigkeit überweg, vorgegebenen bzw. vorgebbaren Einspritzprofil bestimmt wird, wobei das aktive Absperren (11) des gefüllten Schneckenvorraums (9) gegen den Widerstand einer Verschlußdüse (11, 17, 18) erfolgt, und wobei der Startpunkt für die Vorschubbewegung (13) der Extruderschnecke (14) erst mit der aktiven Sperrung (11, 14, 19) des Kunststoffschmelze-Rückstroms und/oder mit dem Öffnen der Verschlußdüse (12, 17, 18) in die Spritzform (2) gesetzt bzw. bestimmt wird (8),
**dadurch gekennzeichnet,**
daß die exakte Abarbeitung des Einspritzprofils der Sollwert-Vorgabe erst mit der aktiven Sperrung (11, 14, 19) des Kunststoffschmelze-Rückstroms und/oder mit dem Öffnen der Verschlußdüse (12, 17, 18) in die Spritzform (2) durch zeitbestimmte Beaufschlagung des Vorschubzylinders (13) für die Extruderschnecke (14) mit einer nach Druck und Menge definierbaren Arbeitsflüssigkeit gestartet wird (4).

4. Vorrichtung zum Spritzgießen von Formteilen aus thermoplastischem Kunststoff, bei welcher einem Schneckenextruder mit einem von einer Rückstromsperre (11) begrenzten Schneckenvorraum (9) für die auszutreibende Kunststoffschmelze zur Beeinflussung des Spritzvorgangs ein programmiertes bzw. programmierbares (4) Ablauf-Steuersystem (3) zugeordnet ist, wobei dem Ablauf-Steuersystem (3) eine die Rückstromsperre (11) aktivierende Verschlußdüse (12) und ein Starter (8) zugeordnet ist, und wobei der Starter (8) in Abhängigkeit von der Schließstellung der Rückstromsperre (11) und/oder von der Öffnungsbewegung (6) der Verschlußdüse (12) aktivierbar ist,
**dadurch gekennzeichnet,**
daß der Starter (8) ein der Nadelverschlußdüse (12) zugeordneter Mikroschalter ist.

5. Vorrichtung zum Spritzgießen von Formteilen aus thermoplastischem Kunststoff, bei welcher einem Schneckenextruder mit einem von einer Rückstromsperre (11) begrenzten Schneckenvorraum (9) für die auszutreibende Kunststoffschmelze zur Beeinflussung des Spritzvorgangs ein programmiertes bzw. programmierbares (4) Ablauf-Steuersystem (3) zugeordnet ist, wobei dem Ablauf-Steuersystem (3) eine die Rückstromsperre (11) aktivierende Verschlußdüse (12) und ein Starter (8) zugeordnet ist, und wobei der Starter (8) in Abhängigkeit von der Schließstellung der Rückstromsperre (11) und/oder von der Öffnungsbewegung (6) der Verschlußdüse (12) aktivierbar ist,
**dadurch gekennzeichnet,**
daß der Starter (8) aus zusammenarbeitenden Druck-, Mengen- und Zeitschaltern besteht und dabei die Druck- und Mengenschalter durch das Arbeitsmittel für den Vorschubzylinder (13) der Extruderschnecke (14) beaufschlagbar sind.

## Claims

1. Method of injection-moulding shaped parts from synthetic material able to be injection moulded, in which initially the synthetic material is plasticised by a rotationally-driven extruder worm from the worm cylinder of an extruder into a worm antechamber, then the filled worm antechamber is actively blocked against return flows of the synthetic material melt into the worm cylinder, in which the synthetic material melt is then driven out of the reservoir chamber into the injection mould by advance of the extruder worm, and in which the work cycle of the injection process is determined by an injection profile which is preset or presettable, for example according to speed over travel, wherein the active blocking (11) of the filled worm antechamber (9) is effected against the resistance of a closure nozzle (11, 17, 18) and wherein the starting point for the advance movement (13) of the extruder worm (14) is set or determined (8) just by the active blocking (11, 14, 19) of the return flow of synthetic material melt and/or by the opening of the closure nozzle (12, 17, 18) in the injection mould (2), characterised thereby that the exact working through of the injection profile of the target value presetting by the active blocking (11, 14, 19) of the return flow of the synthetic material melt and/or by the opening of the closure nozzle (12, 17, 18) in the injection mould (2) is started (4, 7) only on agreement of the melt pressure prevailing in the worm antechamber (9) with a preset or presettable reference or target pressure (6a).

2. Method of injection-moulding shaped parts from synthetic material able to be injection moulded, in which initially the synthetic material is plasticised by a rotationally-driven extruder worm from the worm cylinder of an extruder into a worm antechamber, then the filled worm antechamber is actively blocked against return flows of the synthetic material melt into the worm cylinder, in which the synthetic material melt is then driven out of the reservoir chamber into the injection mould by advance of the extruder worm, and in which the work cycle of the injection process is determined by an injection profile which is preset or presettable, for example according to speed over travel, wherein the active blocking (11) of the filled worm antechamber (9) is effected against the resistance of a closure nozzle (11, 17, 18) and wherein the starting point for the advance movement (13) of the extruder worm (14) is set or determined (8) just by the active blocking (11, 14, 19) of the return flow of synthetic material melt and/or by the opening of the closure nozzle (12, 17, 18) in the injection mould (2), characterised thereby that the exact working through of the injection profile of the target value presetting by the active blocking (11, 14, 19) of the return flow of the synthetic material melt and/or by the opening of the closure nozzle (12, 17, 18) in the injection mould (2) is started (4, 7) exclusively on agreement of an operating medium pressure prevailing in the advance cylinder (13) for the extruder worm (14) with a preset or presettable reference or target pressure (6a).

3. Method of injection-moulding shaped parts from synthetic material able to be injection moulded, in which initially the synthetic material is plasticised by a rotationally-driven extruder worm from the worm cylinder of an extruder into a worm antechamber, then the filled worm antechamber is actively blocked against return flows of the synthetic material melt into the worm cylinder, in which the synthetic material melt is then driven out of the reservoir chamber into the injection mould by advance of the extruder worm, and in which the work cycle of the injection process is determined by an injection profile which is preset or presettable, for example according to speed over travel, wherein the active blocking (11) of the filled worm antechamber (9) is effected against the resistance of a closure nozzle (11, 17, 18) and wherein the starting point for the advance movement (13) of the extruder worm (14) is set or determined (8) just by the active blocking (11, 14, 19) of the return flow of synthetic material melt and/or by the opening of the closure nozzle (12, 17, 18) in the injection mould (2), characterised thereby that the exact working through of the injection profile of the target value presetting by the active blocking (11, 14, 19) of the return flow of the synthetic material melt and/or by the opening of the closure nozzle (12, 17, 18) in the injection mould (2) is started (4, 7) by time-determined loading of the advance cylinder (13) for the extruder worm (14) by an operating fluid definable in pressure and quantity.

4. Device for the injection moulding of shaped parts from thermoplastic material, in which a programmed or programmable (4) cycle control system (3) is associated with a worm extruder with a worm antechamber (9), which is bounded by a return flow barrier (11), for the driven-out synthetic material melt for the influencing of the injection process, wherein a closure nozzle (12), which activates the return flow barrier (11), and a starter (8) are associated with the cycle control system (3), and wherein the starter (8) is activatable in dependence on the closure setting of the return flow barrier (11) and/or on the opening movement (6) of the closure nozzle (12), characterised thereby that the starter (8) is a microswitch associated with the needle closure nozzle (12).

5. Device for the injection moulding of shaped parts from thermoplastic synthetic material, in which a programmed or programmable (4) cycle control system (3) is associated with a worm extruder with a worm antechamber (9), which is bounded by a return flow barrier (11), for the driven-out synthetic material melt for the influencing of the injection process, wherein a closure nozzle (12), which activates the return flow barrier (11), and a starter (8) are associated with the cycle control system (3), and wherein the starter (8) consists of co-operating pressure, quantity and time switches and in that case the pressure and quantity switches are loadable by the operating medium for the advance cylinder (13) of the extruder worm (14).

## Revendications

1. Procédé pour le moulage par injection de pièces moulées en matière synthétique moulable par injection, dans lequel on plastifie la matière synthétique au préalable, à l'aide d'une vis d'extudeuse entraînée en rotation, en la faisant passer d'un cylindre à vis d'une extrudeuse dans une préchambre, on verrouille ensuite activement la préchambre remplie afin d'éviter un reflux de matière synthétique fondue dans le cylindre à vis, dans lequel on éjecte ensuite la matière synthètique fondue par avancement de la vis d'extrudeuse, de la chambre de réserve dans le moule, et dans lequel le déroulement de l'opération d'injection est déterminé par une courbe d'injection prédéterminée ou prédéterminable, par exemple de la vitesse en fonction du déplacement, le verrouillage actif (11) de la préchambre remplie (9) étant effectué contre la résistance d'une buse obturable (11,17,18) et le point de départ du mouvement d'avancement (13) de la vis d'extrudeuse (14)n'étant fixé ou déterminé (8)que lors du verrouillage actif (11,14,19) du reflux de matière synthétique fondue et/ou lors de l'ouverture de la buse obturable (12,17,18) à l'intérieur du moule, caractérisé en ce qu'on ne démarre le suivi (4,7)exact de la courbe d'injection de consigne avec le verrouillage actif (11,14,19) du reflux de matière synthétique fondue et/ou l'ouverture de la buse obturable (12,17,18) à l'intérieur du moule (2) que lorsque la pression du bain fondu régnant dans la préchambre (9) correspond à une pression de consigne ou de référence prédéterminée ou prédéterminable (6a).

2. Procédé pour le moulage par injection de pièces moulées en matières synthétiques moulables, dans lequel, on plastifie la matière synthétique au préalable à l'aide d'une vis d'extrudeuse entraînée en rotation, en la faisant passer d'un cylindre à vis d'une extrudeuse dans une préchambre, on verrouille ensuite activement la préchambre remplie afin d'éviter un reflux de matière synthétique fondue dans le cylindre à vis, dans lequel on éjecte ensuite la matière synthétique fondue par avancement de la vis d'extrudeuse , de la chambre de réserve dans le moule, et dans lequel le déroulement de l'opération d'injection est déterminé par une courbe d'injection prédéterminée ou prédéterminable, par exemple de la vitesse en fonction du déplacement, le verrouillage actif (11) de la préchambre remplie (9) étant effectué contre la résistance d'une buse obturable (11,17,18) et le point de départ du mouvement d'avancement (13) de la vis d'extrudeuse (14) n'étant fixé ou déterminé (8) que lors du verrouillage actif (11,14,19) du reflux de matière synthétique fondue et/ou lors de l'ouverture de la buse obturable (12,17,18) à l'intérieur du moule, caractérisé en ce qu' on ne démarre (4,7) le suivi exact de la courbe d'injection de consigne avec le verrouillage actif (11,14,19) du reflux de matière synthétique fondue et/ou l'ouverture de la buse obturable (12,17,18) à l'intérieur du moule (c) uniquement lorsqu'une pression d'agent de pression dans le vérin d'avancement (13) de la vis d'extrudeuse (14) correspond à une pression de référence ou de consigne (6a) prédéterminée ou prédéterminable.

3. Procédé pour le moulage par injection de pièces moulées en matière synthétique moulable par injection, dans lequel on plastifie la matière synthétique au préalable à l'aide d'une vis d'extrudeuse entraînée en rotation, en la faisant passer d'un cylindre à vis d'une extrudeuse dans une préchambre, on verrouille ensuite activement la préchambre remplie afin d'éviter un reflux de matière synthétique fondue dans le cylindre à vis dans lequel, on éjecte ensuite la matière synthétique fondue par avancement de la vis d' extrudeuse , de la chambre de réserve dans le moule, et dans lequel le déroulement de l'opération d'injection est déterminé par une courbe d'injection prédéterminée ou prédéterminable, par exemple de la vitesse en fonction du déplacement, le verrouillage actif (11) de la préchambre remplie (9) étant effectué contre la résistance d'une buse obturable (11,17,18) et le point de départ du mouvement d'avancement (13) de la vis d'extrudeuse (14) n'étant fixé ou déterminé (8) que lors du verrouillage actif (11,14,19) du reflux de matière synthétique fondue et/ou lors de l'ouverture de la buse obturable (12,17,18) à l'intérieur du moule, caractérisé en ce qu'on ne démarre (4,7) le suivi exact de la courbe d'injection de consigne qu'avec le verrouillage actif (11,14,19) du reflux de matière synthétique fondue et/ou l'ouverture de la buse obturable (12,17,18) à l'intérieur du moule par actionnement déterminé dans le temps du vérin d'avancement (13) de la vis d'extrudeuse (14) à l'aide d'un agent de pression définissable par sa pression et son débit.

4. Dispositif pour le moulage par injection de pièces moulées en matière synthétique thermoplastique, dans lequel un dispositif de commande (3)programmé ou programmable du déroulement de l'opération d'injection est associé à une extrudeuse à vis équipée d'une préchambre (9) limitée par un verrouillage de reflux (11) pour la matière synthétique fondue à éjecter, le dispositif de commande(3) étant équipé d'une buse obturable (12) qui actionne le verrouillage du reflux (11), ainsi que d'un démarreur (8), ledit démarreur (8) étant actionnable en fonction de la position de fermeture du verrouillage de reflux (11) et/ou en fonction du mouvement d'ouverture (6) de la buse obturable (12), caractérisé en ce que le démarreur (8) consiste en un microrupteur associé à la buse de fermeture à pointeau (12).

5. Dispositif pour le moulage par injection de pièces moulées en matière synthétique thermoplastique, dans lequel un dispositif de commande (3) programmé ou programmable du déroulement de l'opération d'injection est associé à une extrudeuse à vis équipée d'une préchambre (9) limitée par un verrouillage de reflux (11) pour la matière synthétique fondue à éjecter, le dispositif de commande (3) étant équipé d'une buse obturable (12) qui actionne le verrouillage du reflux (11) ainsi qued'un démarreur (8), ledit démarreur (8) étant actionnable en fonction de la position de fermeture du verrouillage de reflux (11) et/ou en fonction du mouvement d'ouverture (6) de la buse obturable (12),
caractérisé en ce que le démarreur (8) consiste en des rupteurs de pression, de volume et des interrupteurs à minuterie et en ce que ceux-ci sont actionnables par l'agent de pression du vérin d'avancement (13) de la vis d'extrudeuse (14).
